# DEMANDE DE BREVET EUROPEEN

(11) **EP 1 353 286 A1**
(43) Date de publication de la demande: **15.10.2003**
(21) Numéro de dépôt: 03290846.9
(22) Date de dépôt: 04.04.2003
(51) Int. Cl.: G06F 17/60

(54) **Procédé et système pour optimiser une recuperation d'équipements**

(30) Priorité: 12.04.2002 FR 0204637
(71) Demandeur: Baron, Frédéric, 78860 Saint-Nom-la-Breteche (FR)
(72) Inventeur: Baron, Frédéric, 78860 Saint-Nom-la-Breteche (FR)
(74) Mandataire: Loisel, Bertrand

(57) **Abrégé**

Le procédé comprend une étape (1) pour répertorier une dénomination spécifique et une coordonnée de localisation pour chaque équipement dans une première base de données (12) à un moment qui fait suite à une acquisition pour usage de l'équipement par un utilisateur, une étape (2) pour répertorier une liste de lieux potentiels de reprise pour chaque type de dénomination spécifique dans une deuxième base de données (21), une étape (4) pour interroger la deuxième base de données à réception d'une première question d'un utilisateur identifiant un équipement de dénomination spécifique et de localisation, répertoriées dans la première base de données, de façon à émettre à destination de cet utilisateur, une première réponse à cette première question et une deuxième question portant sur une reprise de l'équipement identifié, une étape (8) pour établir un lieu de reprise pour chaque équipement identifié par la première question, à réception d'une deuxième réponse d'utilisateur à la deuxième question, chaque lieu de reprise étant choisi parmi les lieux potentiels de la deuxième base de données, et une étape (9) pour ordonner à un transporteur d'enlever chaque équipement sur un lieu de réception déterminé à partir de la coordonnée de localisation et de livrer ce bien d'équipement sur le lieu de reprise choisi.

## Description

Le domaine de l'invention est celui de la récupération d'équipements. Il arrive généralement un moment où un utilisateur estime qu'un équipement n'est plus adapté à l'usage qu'il en attend. Les causes en sont multiples et variées. L'équipement peut être sujet à différents dysfonctionnements qui résultent de son utilisation. L'équipement peut aussi être de performances non suffisantes pour un usage croissant ou tout simplement devenu obsolète face à une évolution technologique.

L'utilisateur peut préférer se contenter de son équipement avec une satisfaction moindre car en acquérant un nouvel équipement, il risque de ne savoir que faire de son ancien équipement.

Afin de ne pas se priver d'un nouvel équipement plus performant grâce à un plus faible degré d'usure et grâce aussi à l'évolution technologique, l'utilisateur peut envisager d'essayer de trouver un acquéreur pour l'ancien équipement qui l'encombre. Ceci n'est pas toujours facile et parfois décourageant. L'utilisateur peut préférer purement et simplement se débarrasser de son ancien équipement en le jetant sur une décharge ou en profitant d'un ramassage municipal d'encombrants.

Ces solutions sont peu satisfaisantes pour différentes raisons. Le transport de l'ancien équipement est parfois problématique pour des questions de poids et de volume, que ce soit pour l'acheminer vers un éventuel acquéreur ou vers une décharge. C'est par exemple le cas d'un réfrigérateur, d'une cuisinière ou d'une machine à laver. Le fait de jeter l'ancien équipement prive de façon regrettable un autre utilisateur moins exigeant. Un amoncellement sauvage de biens d'équipements usagés, prive aussi l'industrie de pièces détachées pour réparer des équipements semblables et de matériaux de base tels que souvent le fer, le cuivre voire même l'or sur certaines cartes de circuits imprimés.

De plus, l'existence de décharges, est préjudiciable à l'environnement de part la place prise et de part les produits polluants qu'elles accumulent. On peut envisager d'y détruire leur contenu par combustion des composés carbonés et fusion simultanée des métaux. Cependant une telle destruction de masse risque de répandre dans la nature des produits dangereux, gaz nocifs résultant de la combustion de matériaux synthétiques, liquides caloporteurs dans les réfrigérateurs ou composés fluorescents sur des écrans de télévision ou d'ordinateurs.

Il existe des procédés de tri de déchets organisés par les collectivités locales avec des ramassages différenciés pour les papiers, le verre et les matériaux putrescibles. Cependant, si ces procédés sont adaptés pour la collecte systématique de déchets facilement identifiables et répétitifs, ils le sont peu ou pas pour une collecte éparse et occasionnelle de produits variés que sont des équipements tels que des ordinateurs, des fours ménagers, des réfrigérateurs, des machines à laver ou des tondeuses à gazon, de plus réalisés selon des technologies qui varient dans l'espace et dans le temps.

Un objectif de l'invention est d'organiser une récupération d'équipements de façon efficace à la foi pour l'environnement et pour les utilisateurs.

Un premier objet de l'invention est un procédé pour optimiser une récupération d'équipements. Ce procédé est remarquable en ce qu'il comprend des étapes pour:
- répertorier une dénomination spécifique et une coordonnée de localisation pour chaque équipement dans une première base de données à un moment qui fait suite à une acquisition pour usage de l'équipement par un utilisateur,
- répertorier une liste de lieux potentiels de reprise pour chaque type de dénomination spécifique dans une deuxième base de données,
- interroger la deuxième base de données à réception d'une première question d'un utilisateur identifiant un équipement de dénomination spécifique et de localisation, répertoriées dans la première base de données, de façon à émettre à destination de cet utilisateur, une première réponse à cette première question et une deuxième question portant sur une reprise de l'équipement identifié,
- établir un lieu de reprise pour chaque équipement identifié par la première question, à réception d'une deuxième réponse d'utilisateur à la deuxième question, chaque lieu de reprise étant choisi parmi les lieux potentiels de la deuxième base de données,
- ordonner à un transporteur d'enlever chaque équipement sur un lieu de réception déterminé à partir de la coordonnée de localisation et de livrer ce bien d'équipement sur le lieu de reprise choisi.

L'action qui consiste à répertorier une dénomination spécifique d'un équipement dans la première base de données permet d'en connaître les propriétés lors d'une récupération future. L'action qui consiste à répertorier une liste de lieux potentiels de reprise pour le type de dénomination spécifique, a pour effet technique de préparer le tri lors de la récupération future. L'action qui consiste à interroger la deuxième base de données, permet de choisir dans la liste de lieux potentiels, celui le plus approprié pour une reprise. Le lieu le plus approprié est par exemple celui qui a la plus forte capacité de récupération, le savoir-faire lié à l'équipement ou celui qui est le plus proche de la localisation de l'équipement. Ce peut être aussi celui qui permet à un utilisateur d'acquérir son nouvel équipement au moindre coût. Ce peut être encore celui où la récupération de l'équipement, est la plus demandée. L'action qui consiste à ordonner à un transporteur d'enlever chaque équipement sur un lieu de réception déterminé à partir de la coordonnée de localisation et de livrer ce bien d'équipement sur le lieu de reprise choisi, a pour effet technique de débarrasser un groupe d'utilisateurs en réduisant le coût de transport grâce à la possibilité offerte d'organiser une route optimale passant par plusieurs localisations et éventuellement plusieurs lieux de reprise.

En comparaison des procédés qui établissent un circuit d'acheminement de l'équipement après que l'utilisateur s'en est dessaisi, le dialogue établi directement avec l'utilisateur tant qu'il possède encore l'équipement, permet de déterminer dans quel état est l'équipement. Ceci présente l'avantage de pouvoir prévoire un type de reprise le plus approprié, reprise directe auprès de l'utilisateur pour récupération des composants d'un équipement en mauvais état ou pour le marché de l'occasion d'un équipement en bon état. Le choix du mode de transport peut alors être adapté au type de reprise, mode de transport plus sommaire pour un équipement destiné à être démantelé, mode de transport plus soigné pour un équipement destiné à être réutilisé de façon à ne pas le détériorer entre son lieu de détention par l'utilisateur et le lieu de reprise choisi.

Chaque lieu de réception est déterminé après réception de la deuxième réponse qui confirme une demande de reprise. Avantageusement, le procédé comprend des étapes pour:
- associer à chaque type de dénomination spécifique d'équipement dans la première base de données, une quantité prévisionnelle d'équipements susceptibles de reprise, estimée à partir des premières questions qui identifient les équipements avec ce type de dénomination spécifique,
- quantifier un volume de transport prévisible à partir des quantités prévisionnelles associées chacune à un type de dénomination spécifique.

L'action qui consiste à associer à chaque type de dénomination spécifique d'équipement dans la première base de données, une quantité prévisionnelle d'équipements susceptibles de reprise, a pour effet technique d'anticiper le moment où il conviendra de reprendre le bien d'équipement. L'action qui consiste à quantifier un volume de transport prévisible à partir des quantités prévisionnelles associées, a pour effet technique de déterminer les capacités de transport à mettre en place pour ne créer ni surcharge ni sous charge.

Avantageusement aussi, le procédé comprend une étape pour élaborer ou enrichir des données statistiques d'estimation de fin d'usage, à partir des premières questions et deuxièmes réponses reçues de plusieurs utilisateurs.

Cette action a pour effet technique un asservissement en boucle fermée des prévisions de transport, sur le comportement réel des utilisateurs.

De nombreux contenus peuvent être envisagés pour la première réponse. La première réponse peut par exemple simplement contenir un ou plusieurs lieux potentiels extraits de la deuxième base de donnée avec une indication d'efficacité attribuée dans la deuxième base de données à chaque lieu potentiel.

Plus particulièrement le procédé comprend une étape pour émettre une troisième question à destination de repreneurs associés dans la deuxième base de données, à des lieux de reprise qui conviennent pour l'équipement identifié dans la première question et pour élaborer la première réponse à partir de troisièmes réponses reçues des dits repreneurs.

Un deuxième objet de l'invention est un système pour optimiser une récupération de biens d'équipements. Ce système est remarquable en ce qu'il comprend:
- une première base de données, agencée pour répertorier des dénominations spécifiques et des coordonnées de localisation d'équipements,
- une deuxième base de données, agencée pour répertorier au moins une liste de lieux potentiels de reprise pour différents types de dénomination spécifique,
- un serveur informatique comprenant des moyens de communication agencés pour alimenter la première base de donnée à chaque acquisition pour usage d'un équipement par un utilisateur, pour recevoir une première question émise par l'utilisateur d'au moins un équipement, pour interroger la deuxième base de données de façon à émettre une première réponse à la première question avec une deuxième question portant sur une reprise de cet équipement vers l'utilisateur, et pour ordonner à un transporteur d'enlever cet équipement sur un lieu de réception déterminé à partir de la coordonnée de localisation afin de livrer ce bien d'équipement sur un lieu de reprise choisi parmi les lieux potentiels de la deuxième base de données suite à une réception de deuxième réponse émise par cet utilisateur pour déclencher une reprise de cet équipement.

Ce système permet de mettre en oeuvre un procédé conforme à l'invention. Particulièrement, le serveur informatique a pour effet technique d'exécuter de façon automatique de nombreuses étapes du procédé et de mettre en relation différents acteurs intervenant dans le procédé de façon automatique sans nécessiter pour ceux-ci de fastidieuses recherches.

Particulièrement, le serveur informatique comprend des moyens de traitement prévisionnel, agencés pour estimer une quantité prévisionnelle d'équipements susceptibles de reprise, à partir des premières questions qui identifient les équipements avec un même type de dénomination spécifique d'équipement, pour associer la quantité prévisionnelle à ce type de dénomination spécifique dans la première base de données, et pour quantifier un volume de transport prévisible à partir des quantités prévisionnelles associées chacune à un type de dénomination spécifique.

Particulièrement aussi, le serveur informatique comprend des moyens de traitement statistique, agencés pour élaborer ou enrichir des données statistiques d'estimation de fin d'usage, à partir des premières questions et deuxièmes réponses reçues de plusieurs utilisateurs.

Particulièrement encore, les moyens de communication sont agencés pour émettre une troisième question à destination de repreneurs associés dans la deuxième base de données, à des lieux de reprise qui conviennent pour l'équipement identifié dans la première question et pour élaborer la première réponse à partir de troisièmes réponses reçues des dits repreneurs.

Plusieurs avantages et détails de l'invention apparaîtront clairement à l'homme du métier par la lecture de la description d'un mode particulier de réalisation qui suit en référence aux dessins annexés dans lesquels:
- la figure 1 montre une articulation d'étapes de procédé conforme à l'invention;
- la figure 2 est un schéma de système conforme à l'invention.

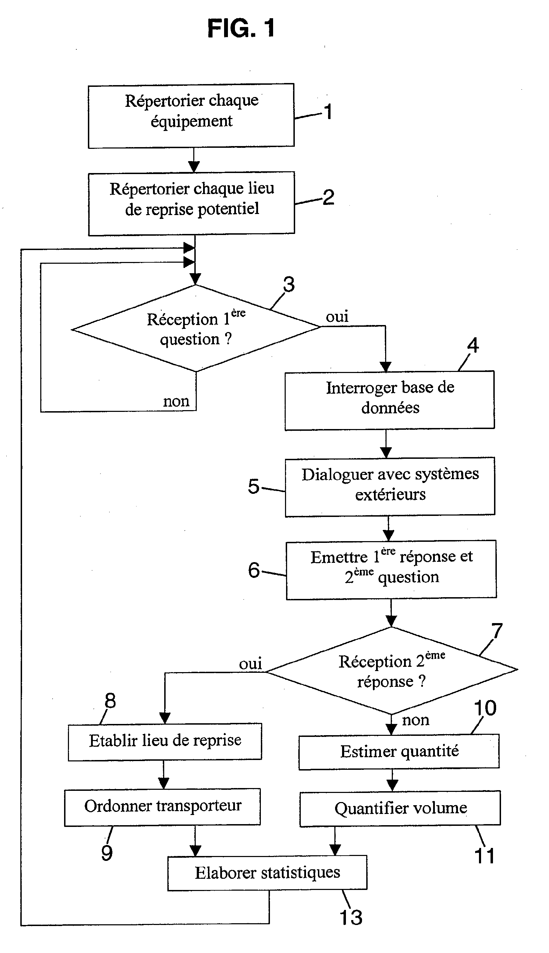

En référence à la figure 1, on distingue des étapes 1 et 2 qui ont pour fonction de préparer et de tenir à jour des connaissances utiles pour mettre en oeuvre le procédé, des étapes 3 à 7 qui ont pour fonction de détecter des inclinations et des volontés d'utilisateurs à se faire reprendre leurs équipements, des étapes 8 et 9 pour organiser une collecte efficace des équipements pour lesquels des utilisateurs ont manifesté une volonté marquée de reprise et des étapes 10, 11 et 13 de perfectionnement du procédé.

Lorsqu'un utilisateur acquiert un équipement pour en faire usage, les propriétés distinctives de cet équipement sont connues. Pour faire bénéficier l'utilisateur du procédé selon l'invention, il lui est demandé de communiquer une dénomination spécifique et une coordonnée de localisation de son équipement. La dénomination spécifique comprenant par exemple la marque, le type et ou l'année de l'équipement, permet de reconnaître l'équipement. Un équipement tel qu'un réfrigérateur, une télévision, un micro-ordinateur ou une cuisinière, a généralement une plaque signalétique dont les éléments principaux sont mentionnés sur un bon de livraison. La coordonnée de localisation comprenant par exemple une adresse postale, permet de savoir où l'équipement est physiquement situé.

Dans l'étape 1, à un moment qui fait suite à l'acquisition de l'équipement, la dénomination spécifique et la coordonnée de localisation sont répertoriées dans une base de données 12. Ce moment qui fait suite à l'acquisition de l'équipement est le moment d'acquisition lui-même ou un moment dans un laps de temps raisonnable après l'acquisition, c'est à dire suffisamment court pour pouvoir considérer que les propriétés de l'équipement n'ont pas varié, c'est par exemple la période de garantie. Ensuite, l'utilisateur de l'équipement qui bénéficie du procédé, peut tenir à jour les données qui le concernent en modifiant par exemple la coordonnée de localisation si l'utilisateur a déménagé. L'étape 1 permet ainsi de tracer chaque équipement dont l'utilisateur souhaite pouvoir bénéficier du procédé en fin d'usage.

Dans l'étape 2, indépendamment de divers exécutions de l'étape 1, une liste de lieux potentiels de reprise pour chaque type de dénomination spécifique, est répertoriée dans une base de données 21. Cette liste est préférentiellement tenue à jour en fonction des lieux potentiels disponibles et de l'apparition de nouveaux types de dénomination spécifique. Les lieux potentiels de reprise sont par exemple des entrepôts dont les adresses sont communiquées par leurs gestionnaires tels que des constructeurs d'équipements intéressés pour respecter une législation en matière d'environnement qui concerne une reprise d'équipement en fin d'usage, tels que des organismes de maintenance intéressés par des pièces détachées ou tels que des revendeurs de matériels d'occasion. Les lieux potentiels de reprise sont par exemple encore des unités de traitement de déchets dont les adresses sont communiquées par les gestionnaires précédemment mentionnés pour des cas où ceux-ci estimeraient ne rien pouvoir faire de certains équipements en fin d'usage, ou par les gestionnaires de ces unités de traitement de déchets elles mêmes. L'étape 2 permet ainsi de connaître à tout moment, les possibilités de récupération de chaque type d'équipement dont l'utilisateur ne souhaiterait plus faire usage.

Les bases de données 12 et 21 étant renseignées par les étapes 1 et 2, l'étape 3 est une étape de veille dans laquelle un serveur informatique 14 est en permanence à l'écoute de messages émis individuellement par les utilisateurs d'équipements dont la dénomination spécifique et la coordonnée de localisation sont répertoriés dans la base de données 12.

En étape 3, chaque réception d'une dite première question émise par un utilisateur, active tout ou partie des étapes suivantes 4 à 13 du procédé. Divers contenus possibles pour chaque dite première question, sont préétablis de façon à pouvoir détecter que l'utilisateur qui l'a émise, envisage dans un avenir proche, de mettre fin à l'usage d'un équipement. Ladite première question demande par exemple les nouveaux équipements disponibles qui pourraient remplacer l'équipement identifié. Ladite première question demande par exemple encore le ou les lieux de reprises les mieux appropriés pour reprendre l'équipement, en termes de valeur ou de rapidité de reprise, ou encore en termes d'échange avantageux avec un nouvel équipement. L'étape 3 est avantageuse pour l'utilisateur car l'émission de la première question lui évite de devoir faire de nombreuses recherches pour connaître les nouveaux équipements susceptibles de remplir un usage comparable à son ancien équipement avec des performances améliorées. Selon son contenu, la première question évite aussi à l'utilisateur de devoir faire de nombreuses recherches pour trouver des conditions de reprise intéressantes de son ancien équipement. L'étape 3 est aussi avantageuse pour les repreneurs potentiels d'équipement car elle permet de centraliser des tendances d'utilisateurs dispersés à envisager de faire usage d'un nouvel équipement et ou de se séparer de leur ancien équipement.

Avantageusement, ladite première question est formulée au moyen d'un code personnel d'accès déterminant de façon sécuritaire chaque utilisateur qui l'émet de façon à permettre d'accéder à la dénomination spécifique et à la coordonnée de localisation répertoriés dans la base de données 12 pour identifier chaque équipement.

Dans l'étape 4, le serveur 14 interroge la base de données 21 de façon générer une première réponse destinée à l'utilisateur qui a émis la première question détectée en étape 3. Le type de dénomination spécifique d'équipement reconnu dans la première question ou reconnu dans la base de données 12 à partir de la première question, permet d'extraire de la base de données 21, les lieux potentiels de reprise associés. Parmi les lieux potentiels extraits, un ou plusieurs lieux considérés les mieux adaptés sont choisis et intégrés dans la première réponse avec les conditions de reprise pour le ou chacun des lieux de reprise proposés. Les conditions de reprise sont par exemple un délai, un échange avec un nouvel équipement ou une valeur de reprise à créditer au bénéfice de l'utilisateur. Les conditions de reprise sont directement disponibles dans la base de données 21 ou obtenues en temps réel de repreneurs associés à chaque lieu de reprise. Dans le premier cas, les conditions de reprise sont préalablement stockées et maintenues à jour dans la base de données 21 comme attribut du lieu de reprise qu'elles concernent pour la dénomination spécifique d'équipement identifié. Dans le deuxième cas, une adresse de communication avec chacun des repreneurs associés à un lieu de reprise, est préalablement stockée et maintenue à jour dans la base de données 21 comme attribut du lieu de reprise qu'elle concerne pour le repreneur associé. Cette adresse de communication permet l'exécution de l'étape optionnelle 5 expliquée dans la suite de la description.

Dans l'étape 6, le serveur 14 émet à destination de l'utilisateur, la première réponse et une deuxième question. Ladite deuxième question demande à l'utilisateur une confirmation de reprise en fonction de la première réponse.

Dans l'étape 5, le serveur 14 déclenche un dialogue avec des systèmes extérieurs gérés par des repreneurs associés dans la base de données 21, à des lieux de reprise qui conviennent pour l'équipement identifié dans la première question reçue en étape 3. A l'aide de chaque adresse de communication, attribut d'un lieu de reprise considéré dans la base de données 21, le serveur 14 émet une troisième question à destination du repreneur associé. La troisième question consiste à demander les conditions de reprise. A réception de troisièmes réponses qui contiennent les conditions de reprise communiquées par les repreneurs, le serveur 14 élabore la première réponse en choisissant au moins un lieu potentiel parmi les lieux potentiels extraits qui satisfont au mieux la première question. Le ou les lieux potentiels choisis sont proposés dans la première réponse à l'utilisateur.

La deuxième question est éventuellement accompagnée d'un délai de réponse pour accepter la proposition.

L'étape 7 est une étape de test sur une réception de deuxième réponse à chaque deuxième question émise vers l'utilisateur. Une deuxième réponse positive, marquant un accord de l'utilisateur sur la proposition émise dans la première réponse, déclenche automatiquement une succession des étapes 8 et 9. Une deuxième réponse négative ou une absence de réponse à expiration du délai mentionné dans la deuxième question, court-circuite les étapes 8 et 9.

On indique que les premières et deuxièmes réponses et questions peuvent être intégrées dans un dialogue avec d'autres réponses et questions. Par exemple, une question auxiliaire peut être émise avant la première réponse pour demander des précisions sur un délai de reprise souhaité, sur un état de marche de l'équipement, sur des plages horaires préférées de présence pour accueillir un transporteur, sur des motifs de satisfaction ou d'insatisfaction de l'équipement identifié. Ladite première réponse peut être émise dans un message électronique différent ou dans un même message électronique que la deuxième question. Tout ou partie des réponses et questions d'un dialogue peuvent être cryptées.

Dans l'étape 8, le lieu de reprise est établi en fonction des éléments contenus dans la première et ou la deuxième réponse. Par exemple, les renseignements obtenus dans le dialogue avec l'utilisateur, sont utilisés pour déterminer si l'équipement est encore adapté à un usage de façon l'orienter vers le marché d'occasion ou à l'orienter vers des circuits de récupération s'il est hors d'usage. En particulier, une localisation géographique du lieu de reprise choisi, est extraite de la deuxième base 21 de données et un message est envoyé au gestionnaire du lieu de reprise pour l'informer d'une réception prochaine d'un équipement tel qu'identifié dans la première question.

Dans l'étape 9, le serveur 14 ordonne à un transporteur d'enlever l'équipement identifié et de le livrer sur le lieu de reprise choisi, en communiquant au transporteur l'adresse géographique du lieu de réception déterminé par la coordonnée de localisation extraite de la première base de données l'adresse géographique du lieu de reprise, extraite de la base de données 21.

Les étapes 3, 4, 6, 7 à 9, exécutées pour chaque réception d'une première question identifiant un équipement, permettent d'organiser la collecte d'équipements en regroupant plusieurs équipements pour un transporteur de façon à établir une route optimale pour acheminer chaque équipement de son lieu de réception à son lieu de reprise.

Le procédé est amélioré par une étape 10 exécutée à la suite de l'étape 7 en absence de réponse positive. Lorsqu'un utilisateur ne confirme pas de reprise de son équipement, cet équipement n'est pas récupéré à brève échéance. Cependant par la première question, l'utilisateur a manifesté une certaine tendance à envisager de mettre fin à l'usage de son équipement. Il est probable que cette tendance s'affirme dans un futur proche. Chaque événement comprenant une première question sans deuxième réponse positive incrémente un compteur associé à chaque type de dénomination spécifique dans la base de données 12. La valeur de ce compteur estime alors une quantité prévisionnelle d'équipements susceptibles de reprise. Un drapeau , levé pour chaque équipement répertorié dans la base de données 12, concerné par un tel événement, est utilisé pour décrémenter le compteur à réception ultérieure d'une deuxième réponse positive.

L'étape 10 est alors suivie par une étape 11 pour quantifier un volume de transport prévisible à partir des quantités prévisionnelles associées chacune à un type de dénomination spécifique. Le volume de transport prévisible, communiqué à un transporteur, lui permet de contrôler sa charge à venir.

Avant de revenir en état de veille à l'étape 3, le procédé est encore amélioré par une étape 13 pour élaborer ou enrichir des données statistiques d'estimation de fin d'usage, à partir des premières questions et deuxièmes réponses reçues de plusieurs utilisateurs.

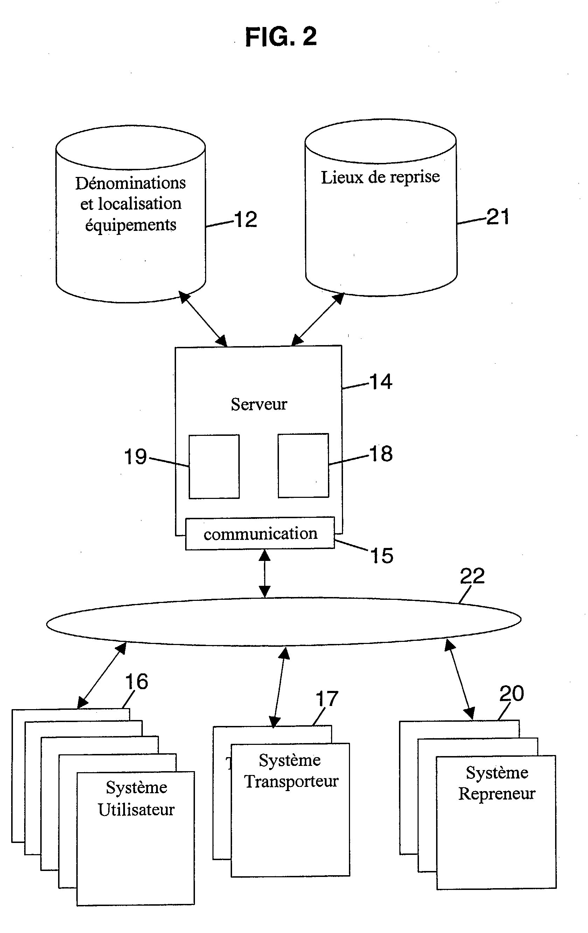

La figure 2 montre un système pour optimiser une récupération d'équipements.

Une première base de données 12 est agencée pour répertorier des dénominations spécifiques et des coordonnées de localisation d'équipements. Un serveur informatique 14 comprend des moyens de communication 15 agencés pour alimenter la première base 12 de donnée à chaque acquisition pour usage d'un équipement par un utilisateur. Chaque utilisateur dispose par exemple d'un système utilisateur 16 tel qu'un micro-ordinateur personnel ou un téléphone mobile relié au serveur 14 par un réseau 22 tel que le réseau Internet ou un réseau UMTS. Lorsque l'utilisateur acquiert un nouvel usage d'équipement, les moyens précédemment décrits lui permettent de communiquer au serveur 14, la dénomination spécifique et les coordonnées de localisation de l'équipement. Il peut par les mêmes moyens tenir à jour les données qui le concernent, telles que celles concernant son adresse géographique.

Une deuxième base de données 21 est agencée pour répertorier au moins une liste de lieux potentiels de reprise pour différents types de dénomination spécifique. Avantageusement, chaque lieu potentiel de reprise possède en attribut, une adresse de communication avec un système repreneur 20 associé au lieu de reprise.

Les moyens de communication 15 sont aussi agencés pour recevoir une première question émise par chaque utilisateur depuis son système utilisateur 16, pour interroger la deuxième base de données 21 de façon à émettre une première réponse à la première question avec une deuxième question portant sur une reprise de cet équipement vers le système utilisateur 16.

Les moyens de communication 15 sont agencés pour émettre une troisième question à destination de système repreneurs 20 associés dans la deuxième base de données 21, à des lieux de reprise qui conviennent pour l'équipement identifié dans la première question et pour élaborer la première réponse à partir de troisièmes réponses reçues des systèmes repreneurs 20.

Un ou plusieurs transporteurs disposent chacun d'un système transporteur 17 relié au serveur 14 par le réseau 22. Les moyens de communication 15 sont alors agencés pour transmettre à l'un des systèmes transporteur 17, un ordre d'enlèvement d'équipement sur un lieu de réception déterminé à partir de la coordonnée de localisation afin de livrer cet équipement sur un lieu de reprise choisi parmi les lieux potentiels de la deuxième base de données 21 suite à une réception de deuxième réponse reçue d'un système utilisateur 16 pour déclencher une reprise de cet équipement.

Le serveur informatique 14 comprend des moyens de traitement prévisionnel 18, agencés pour estimer une quantité prévisionnelle d'équipements susceptibles de reprise, à partir des premières questions qui identifient les équipements avec un même type de dénomination spécifique d'équipement, pour associer la quantité prévisionnelle à ce type de dénomination spécifique dans la première base de données, et pour quantifier un volume de transport prévisible à partir des quantités prévisionnelles associées chacune à un type de dénomination spécifique.

Le serveur informatique 14 comprend des moyens de traitement statistique 19, agencés pour élaborer ou enrichir des données statistiques d'estimation de fin d'usage, à partir des premières questions et deuxièmes réponses reçues de plusieurs utilisateurs 16.

## Revendications

1. Procédé pour optimiser une récupération d'équipements, **caractérisé en ce qu'**il comprend des étapes pour:
- répertorier (1) une dénomination spécifique et une coordonnée de localisation pour chaque équipement dans une première base de données (12) à un moment qui fait suite à une acquisition pour usage de l'équipement par un utilisateur,
- répertorier (2) une liste de lieux potentiels de reprise pour chaque type de dénomination spécifique dans une deuxième base de données (21),
- interroger (4) la deuxième base de données à réception d'une première question d'un utilisateur identifiant (3) un équipement de dénomination spécifique et de localisation, répertoriées dans la première base de données, de façon à émettre (6) à destination de cet utilisateur, une première réponse à cette première question et une deuxième question portant sur une reprise de l'équipement identifié,
- établir (8) un lieu de reprise pour chaque équipement identifié par la première question, à réception (7) d'une deuxième réponse d'utilisateur à la deuxième question, chaque lieu de reprise étant choisi parmi les lieux potentiels de la deuxième base de données,
- ordonner (9) à un transporteur d'enlever chaque équipement sur un lieu de réception déterminé à partir de la coordonnée de localisation et de livrer ce bien d'équipement sur le lieu de reprise choisi.

2. Procédé selon la revendication 1, **caractérisé en ce qu'**il comprend des étapes pour:
- associer (10) à chaque type de dénomination spécifique d'équipement dans la première base de données (12), une quantité prévisionnelle d'équipements susceptibles de reprise, estimée à partir des premières questions qui identifient les équipements avec ce type de dénomination spécifique,
- quantifier (11) un volume de transport prévisible à partir des quantités prévisionnelles associées chacune à un type de dénomination spécifique.

3. Procédé selon l'une des revendications 1 ou 2, **caractérisé en ce qu'**il comprend une étape (13) pour élaborer ou enrichir des données statistiques d'estimation de fin d'usage, à partir des premières questions et deuxièmes réponses reçues de plusieurs utilisateurs.

4. Procédé selon l'une des revendications précédentes, **caractérisé en ce qu'**il comprend une étape (5) pour émettre une troisième question à destination de repreneurs associés dans la deuxième base de données (21), à des lieux de reprise qui conviennent pour l'équipement identifié dans la première question et pour élaborer la première réponse à partir de troisièmes réponses reçues des dits repreneurs.

5. Système pour optimiser une récupération d'équipements, **caractérisé en ce qu'**il comprend:
- une première base de données (12), agencée pour répertorier des dénominations spécifiques et des coordonnées de localisation d'équipements,
- une deuxième base de données (21), agencée pour répertorier au moins une liste de lieux potentiels de reprise pour différents types de dénomination spécifique,
- un serveur informatique (14) comprenant des moyens de communication (15) agencés pour alimenter la première base (12) de donnée à chaque acquisition pour usage d'un équipement par un utilisateur (16), pour recevoir une première question émise par l'utilisateur (16) d'au moins un équipement, pour interroger la deuxième base de données (21) de façon à émettre une première réponse à la première question avec une deuxième question portant sur une reprise de cet équipement vers l'utilisateur (16), et pour ordonner à un transporteur (17) d'enlever cet équipement sur un lieu de réception déterminé à partir de la coordonnée de localisation afin de livrer ce bien d'équipement sur un lieu de reprise choisi parmi les lieux potentiels de la deuxième base de données (21) suite à une réception de deuxième réponse émise par cet utilisateur (16) pour déclencher une reprise de cet équipement.

6. Système selon la revendication 5, **caractérisé en ce que** le serveur informatique (14) comprend des moyens de traitement prévisionnel (18), agencés pour estimer une quantité prévisionnelle d'équipements susceptibles de reprise, à partir des premières questions qui identifient les équipements avec un même type de dénomination spécifique d'équipement, pour associer la quantité prévisionnelle à ce type de dénomination spécifique dans la première base de données, et pour quantifier un volume de transport prévisible à partir des quantités prévisionnelles associées chacune à un type de dénomination spécifique.

7. Système selon la revendication 5 ou 6, **caractérisé en ce que** le serveur informatique (14) comprend des moyens de traitement statistique (19), agencés pour élaborer ou enrichir des données statistiques d'estimation de fin d'usage, à partir des premières questions et deuxièmes réponses reçues de plusieurs utilisateurs (16).

8. Système selon l'une des revendications 5 à 7, **caractérisé en ce que** les moyens de communication (15) sont agencés pour émettre une troisième question à destination de repreneurs (20) associés dans la deuxième base de données (21), à des lieux de reprise qui conviennent pour l'équipement identifié dans la première question et pour élaborer la première réponse à partir de troisièmes réponses reçues des dits repreneurs (20).
